# EUROPEAN PATENT SPECIFICATION

(11) **EP 1 893 436 B1**
(45) Date of publication and mention of the grant of the patent: **09.01.2013**
(21) Application number: 05805025.3
(22) Date of filing: 14.06.2005
(51) Int. Cl.: B60N 2/02, B60N 2/04, B60N 2/06, B60N 2/16, B60N 2/18, B60N 2/22, B60N 2/427, B60N 2/50, B60R 21/013

(54) **METHOD OF CONTROLLING A VEHICLE SEAT**
VERFAHREN ZUR STEUERUNG EINES FAHRZEUGSITZES
MÉTHODE DE COMMANDE DE SIÈGE DE VÉHICULE

(43) Date of publication of application: 05.03.2008
(73) Proprietor: RENAULT TRUCKS, 69800 Saint Priest (FR)
(72) Inventor: NIVERT, Christophe, F-69806 Saint Priest Cedex (FR)
(74) Representative: Putet, Gilles
(86) International application number: PCT/IB2005/002327
(87) International publication number: WO 2006/134417

(56) References cited:
- EP-A- 0 756 974
- DE-A1- 10 321 871
- DE-A1- 19 961 799
- US-A- 6 082 715
- US-A- 6 109 691
- US-A1- 2002 125 750

## Description

### Field of the invention

The present invention regards a Method of controlling a vehicle seat especially an industrial vehicle seat.

### Technological background

A vehicle seat has to perform several functions with regard to a seat occupant.

A typical seat of an industrial vehicle such as a truck has a seat suspension that is to say a mechanism that provides a flexible connection between the seat and a cabin where the seat is mounted. The object of the seat suspension is to improve the comfort of the seat occupant by absorbing the vibration input transmitted to the cabin.

Along with a suspension, a typical seat is usually equipped with reclining means, which allow a backrest part of the seat to be angularly adjusted with regard to a cushion part of the seat according to the morphology of the seat occupant or to the wish of the seat occupant.

Apart from providing a satisfactory level of comfort to a seat occupant, a vehicle seat can also be equipped with restraint means. A safety belt can be incorporated into the structure of the seat to restrain the seat occupant in case of a vehicle deceleration. The fact that the seat belt is incorporated into the structure of the seat rather than fixed onto the cabin offers a more comfortable restraint to the seat occupant as the seat belt is closer to the body of the seat occupant.

A vehicle seat is therefore a complex system, which has different functions and includes different subcomponents.

In the event of a vehicle acceleration or deceleration, the seat like any parts of the vehicle, is subject to various forces.

Low deceleration when the vehicle brakes or low acceleration when the vehicle accelerates or drives along a curve can have an effect on the seat suspension.

In a high deceleration, for example when the vehicle is involved in a collision with another vehicle or with an obstacle, the seat tends to rotate forwardly relative to the cabin; this is caused by an inertia force associated with the seat and the occupant sitting thereon.

More specifically, the cushion seat part tends to rotate forwardly with regard to its front end section and the back seat part may tend to rotate forwardly with regard to its connection to the cushion seat part. The fact that the seat is equipped with a reclining mechanism may increase the rotation of the backrest of the seat as the reclining mechanism is inherently a weak point in the seat structure.

A negative consequence of the forward rotation of the seat cushion part is a so-called submarining of the occupant. As the cushion part of the seat tends to tilt forwardly, the seat occupant may slide under the abdominal part of the seat belt. The occupant is, therefore, at great risk of colliding with a rigid component of the vehicle such as a steering wheel or a dashboard. In the case of a seat incorporating a safety belt, the restraint effect of the safety belt is seriously undermined by the fact that the seat belt is fixed to a seat which, in case of a high deceleration, may itself have a forward motion.

Another aspect of the current vehicle seat which is not totally satisfactory regards the comfort offered by the seat to the occupant. In the case of a seat, which has its own suspension, the suspension has a set flexibility. The seat suspension is set to absorb the vibration input, which occurs in average driving conditions. The seat suspension is totally ineffective and can be detrimental to the comfort of the occupant when the vehicle operates in conditions different from the average conditions for which the suspension is set.

It appears therefore that a vehicle seat is an essential piece in the comfort and safety of a vehicle driver or passenger but there is room for improving both seat comfort and safety as these functions are not totally satisfactorily addressed by the current vehicle seats.

Document US-6.109.691 discloses a method of controlling a seat for a vehicle according to the preamble claim 1

### Summary of the invention

It is an object of the invention to provide a vehicle seat capable of improving both the comfort and the safety of a seat occupant.

It is a further object of the invention to ensure that the seat is in the most adequate configuration with regard to the comfort and safety of the occupant.

The method of the present invention meets these or other objectives by providing a method of controlling a vehicle seat, as defined by claim 1.

The specificity of the invention is to measure one or more operational parameters of the vehicle; from these parameters which are representative of the operational mode of the vehicle at one time, the method makes provision to coordinate actions on all the seat functions to adjust the seat into a configuration which is best suited to the seat occupant in terms of comfort and safety.

The invention aims at constantly monitoring the vehicle operational parameters, identifying a vehicle operational mode from these operational parameters and translating the identified vehicle operational mode into actions onto the vehicle seat subcomponents to adapt the seat in all its subcomponents so that the seat optimises the occupant safety and comfort. The method according to the invention makes it possible to exercise a global control over all seat functions.

The method can be implemented on a vehicle seat whereby the at least two functionally controllable features of the vehicle seat come from the group including flexibly connecting said seat to the vehicle; adjusting an angular position of the seat with regard to the vehicle; adjusting an angular position of a backrest part of the seat with regard to a cushion part of the seat; restraining an occupant onto the vehicle seat.

In the invention, the functionally controllable features can suitably comprise electronically controllable subcomponents.

Thus, an important point of the invention is that a coordinated action is exercised on all the seat subcomponents of the seat affecting the comfort and the safety of the seat occupant; in other words, the invention provides a method to adjust the configuration of the seat in all vehicle operation conditions that is to say in one of several normal running conditions as well as in imminent collision conditions or collision conditions. In the invention, the seat is regarded as an entity which can be globally configured to benefit the safety and comfort of the occupant. It can be noted that the method has an effect on the seat in a normal operational mode of the vehicle whereby the seat is configured to optimize the comfort of the occupant and in an imminent collision mode or a collision mode whereby the seat is configured to optimize the safety of the occupant.

In a possible implementation of the invention, the seat includes one or more subcomponent of the group including a suspension mechanism adapted to flexibly connect the seat to the vehicle and/or to angularly adjust the seat position relative to the vehicle; a reclining mechanism adapted to allow an angular displacement of a backrest part of the seat relative to a cushion part of the seat; a restraint mechanism having a seat belt and belt winding means adapted to restrain an occupant onto the seat.

In the case of vehicle seat such as an industrial vehicle the electronically controllable subcomponents may includes: a suspension mechanism adapted to flexibly connect the seat to the vehicle and/or to angularly adjust the seat position relative to the vehicle; a reclining mechanism adapted to allow an angular displacement of a backrest part of the seat relative to a cushion part of the seat; a restraint mechanism having a seat belt and belt winding means adapted to restrain an occupant onto the seat.

The method according to the invention is especially adapted to a seat found on an industrial vehicle. An industrial vehicle seat is a complex entity which has to maintain the safety and the comfort of a seat occupant and, to this end, can have at least a suspension mechanism, a reclining mechanism or/and a restraint mechanism. The method according to the invention ensures that each of all the subcomponents which are part of the seat, are put in a configuration adapted to provide the occupant with the most adequate level of safety and comfort given the operational mode of the vehicle.

The action(s) on at least one of the subcomponents can be one or the combination of two or more actions of the group of: increasing the stiffness of the seat suspension mechanism; decreasing the stiffness of the seat suspension mechanism; locking the seat suspension mechanism; unlocking the seat suspension mechanism, tilting the cushion part of the seat by acting on the seat suspension mechanism; locking the seat belt; unlocking the seat belt; increasing the tension on the seat belt; locking the reclining mechanism; unlocking the reclining mechanism.

By adjusting the seat according to one or the combination of two or more actions of the above-defined group, the seat can be placed in the most adapted configuration in terms of comfort and safety as this will appear in more details below.

An important step of the method relies on the determination of the vehicle operational mode; from this step the seat is placed in a configuration which is adapted to face the operational mode in the most adapted comfort and safety conditions. In concrete terms, the method can comprise the step of sensing a vehicle operational, parameter, which can be chosen in the group comprising: the vehicle longitudinal acceleration, the vehicle transversal acceleration; the vehicle vertical acceleration; the vehicle distance relative to an obstacle; a vehicle motion parameter.

If the vehicle is in a normal braking mode, the method can comprise the step of stiffening the seat suspension mechanism in order to anticipate a tilting motion of the seat and/or in order to set the seat under a configuration where the seat belt has a maximum effect.

If the vehicle is in an imminent collision mode, the method can comprise the further step of increasing the tension of the seat belt, in order to set the seat under a configuration where the seat belt has a maximum effect and/or the further step of locking the reclining mechanism, in order to set the seat under a configuration where a function of the seat, which is a mechanically weak point of the seat, is neutralized; and/or the further step of raising the front end of the cushion part of the seat, in order to set the seat under a configuration where the occupant submarining is obviated.

If the vehicle is in a normal cornering mode, the method can comprise the step of stiffening the seat suspension mechanism in order to limit the effect of the centrifugal force which acts on the seat and/or the further step of locking the seat belt in order to limit the effect of the centrifugal force which acts on the seat occupant.

If the vehicle is in an imminent crash mode, the method can comprise the step of locking the seat belt in order to set the seat under a configuration where the seat belt has a maximum effect; and/or the further step of increasing the tension of the seat belt, in order to set the seat under a configuration where the seat belt has a maximum effect; and/or the further step of locking the reclining mechanism, in order to set the seat under a configuration where a function of the seat which is a mechanically weak point of the seat is neutralised; and/or the further step of raising the front end of the cushion part of the seat, in order to set the seat under a configuration where the occupant submarining is obviated.

If the vehicle runs in a normal road surface mode, the method can comprise the step of increasing the stiffness of the seat suspension mechanism, as in this case the absorption of vibrations is not required.

If the vehicle runs in a degraded road surface mode, the method can comprise the step of decreasing the stiffness of the seat suspension, thus more flexibility of the seat suspension greatly improves the comfort of the occupant.

If the vehicle is in a normal running mode, the method can comprise the steps of unlocking the restraint mechanism to offer the possibility for the seat occupant to move freely within the scope of the seat belt winding mechanism; unlocking the reclining mechanism to offer the possibility for the seat occupant to adjust the back rest part of the seat relative to the cushion part of the seat in a configuration offering a complete absorption of the vibration input transmitted to the cabin.

If the vehicle is in an imminent collision mode, the method can comprise the step of locking the seat belt, in order to set the seat under a configuration where the seat belt has a maximum effect and/or the further step of increasing the tension of the seat belt, in order to set the seat under a configuration where the seat belt has a maximum effect and/or the further step of locking the reclining mechanism, in order to set the seat under a configuration where a function of the seat which is a mechanically weak point of the seat is neutralized.

The method according to the invention can relate to a seat for a vehicle having subcomponents comprising a suspension mechanism adapted to flexibly connect the seat to the vehicle and/or to angularly adjust the seat position relative to the vehicle; a reclining mechanism adapted to allow an angular displacement of a backrest part of the seat relative to a cushion part of the seat; a restraint mechanism having a seat belt and belt winding means adapted to restrain an occupant onto the seat.

The seat can further comprise sensing means capable of sensing one vehicle operational parameter and processing means capable of determining a vehicle operational mode and capable of acting onto at least one of the subcomponents to put the seat in a configuration adapted to the vehicle operational mode. The seat therefore includes all the required equipment to implement the method above described.

In a.possible embodiment of the seat, the sensing means and the processing means are integrated into the seat; the seat is therefore totally autonomous. The processing means can include a CPU.

However, it can also be envisaged to control the seat with input data sensed by sensors, which have other functions in the vehicle such as ABS or EBS sensors.

These and other advantages will become apparent upon reading the following description in view of the drawing attached hereto representing, as a non-limiting example, an embodiment of a seat according to the invention.

### Brief description of the drawing

The following detailed description of embodiments of the invention is better understood when read in conjunction with the appended drawing being understood, however, that the invention is not limited to the specific embodiments disclosed. In the drawing,
Figure 1 is a side view of a seat according to the invention,
Figure 2 is a diagrammatic depiction of the control method,
Figure 3 is a more detailed depiction of the diagram of Figure 2.

### Detailed description of the invention

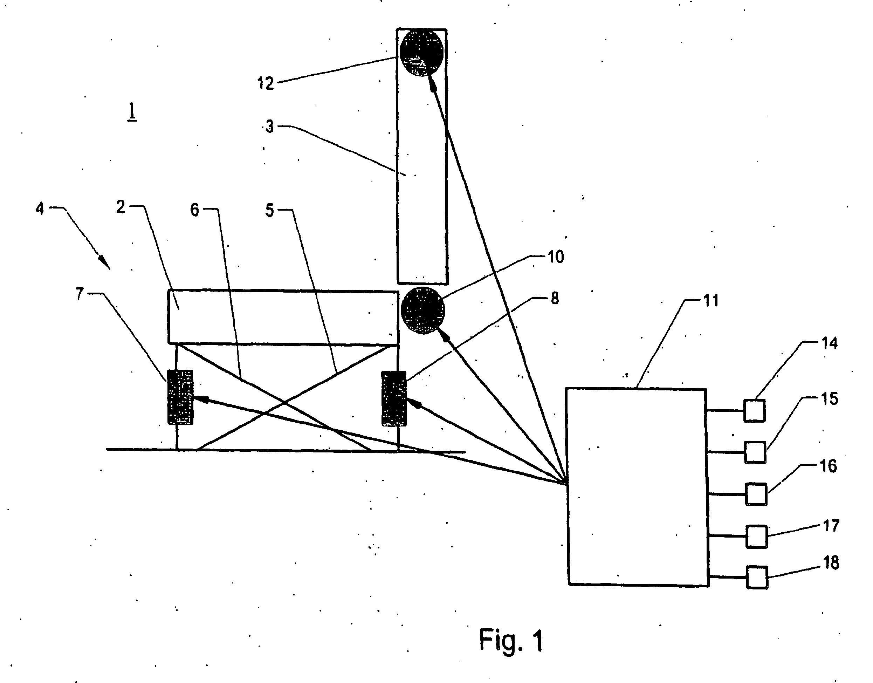

Figure 1 shows schematically a seat 1 suitable to equip a vehicle, preferably a cabin of an industrial vehicle. The seat 1 can be used either as a driver seat or as a passenger seat.

A vehicle seat is the interface between the body of an occupant (driver or passenger) and the vehicle and must perform certain functions with regard to the safety and/or comfort of the seat occupant.

The vehicle seat depicted on Fig 1 has a cushion part 2 and a backrest part 3. The cushion part 2 and the backrest part 3 are each suitably made of a metal frame covered with upholstery.

A suspension mechanism 4 is interposed between the cushion part 2 of the seat and the vehicle, more specifically the floor of the cabin.

The seat suspension mechanism can have a scissor frame which can suitably include two rods 5,6 connected in their middle. A first end of each rod is connected to the cabin floor and the second end of each rod is connected to the cushion part of the seat. A parallelogram frame can also be considered.

In the embodiment of the invention illustrated on Fig 1, the seat suspension mechanism 4 also includes two suspension systems 7,8. A first suspension system 7 is located at the front end of the cushion part 2 and the second suspension 8 system is located at the back end of the cushion part 2. Each suspension system 7,8 can include a suitable form of height adjustable spring. Although different types of height adjustable springs can be employed, it is envisaged to use air or hydraulic springs. Each suspension 7,8 system can also suitably be fitted with damper means.

Each suspension system 7,8 is independently connected to a controller which can be a CPU 11 and which will be described in more detail.

The function of the seat suspension system, which commonly equips industrial vehicles, is to further improve the comfort of the seat occupant, bearing in mind that an industrial vehicle is generally fitted with an extremely stiff suspension.

The seat may also include some kind of means to longitudinally adjust the position of the seat in the cabin. The description of these means is omitted as they are well known.

The seat also includes a reclining mechanism 10, which is an important feature for the comfort of the seat occupant. The reclining mechanism 10 connects the backrest part 3 of the seat with the cushion part 2 of the seat. The reclining mechanism can include two gear segments; one gear segment fixed on the cushion part 2 of the seat and a second gear segment fixed to the backrest part 3 of the seat. Other types of reclining mechanisms may be envisaged such as for example electric, pneumatic or hydraulic reclining means.

Whatever the embodiment of the reclining mechanism is, the latter includes a locking means capable of locking the backrest relative to the cushion part.

The locking means can, for example, comprise a pawl positioned on the cushion part of the seat; the pawl is mobile between a locking position whereby the pawl is inserted in an opening made in the backrest part and an unlocking position whereby the pawl is retracted from the said opening. The pawl can be driven, for example, by an electromagnetic actuator.

The locking means are connected and controlled by the CPU 11.

An additional feature of the seat 1 illustrated in Fig 1 is a restraint mechanism 12.

The restraint mechanism 12 can include a seat belt and means to adjust the tension of the belt. The tension of a seat belt can be adjusted, for example, by an electric motor.

The CPU 11 is connected to the front and rear suspension systems 7,8, the locking means of the reclining mechanism 10 and the restraint mechanism 12.

The CPU 11 can suitably include a microprocessor, a data memory such as a RAM memory and a program memory such as a ROM memory.

In the embodiment of the invention illustrated on the drawing, the seat coordinating control is operated by a single CPU 11.

The CPU 11 can identify different operational modes that the vehicle may encounter. By vehicle operational mode is meant the conditions under which the vehicle operates.

To this end, the CPU 11 receives one or more input signals from different sensors. From the value of these input signals, the CPU 11 determines the vehicle operational mode, that is to say whether the vehicle is running under normal operational mode or imminent collision mode or whether the vehicle is running under normal comfort condition or degraded comfort condition.

Various factors can be monitored to determine the vehicle operational mode; the CPU can, for example, receive input signals from:
- a longitudinal accelerator sensor 14,
- a transversal accelerator sensor 15,
- a vertical accelerator sensor 16,
- a distance sensor 17 such as a laser radar or an infrared sensor.

Other motion parameter sensors 18 can be considered such as speed sensors or yaw acceleration sensors.

These sensors 14,15,16,17,18 periodically measure the value of the vehicle operational parameters (vehicle longitudinal acceleration, vehicle lateral acceleration, vehicle vertical acceleration, distance between the vehicle and an obstacle, vehicle speed in the illustrated embodiment) which are then transmitted to the CPU 11. The CPU 11 can identify the operational mode under which the vehicle is running by comparing the measured value of a parameter with a reference data of said parameter stored for example in the RAM memory of the CPU 11.

The reference data for each parameter can be a threshold value of said parameter, a rate of change of said parameter or a function of said parameter or a combination of two or more of these data.

The acceleration sensors 14, 15, 16 can be part of the seat, in which case the sensing means are integrated into the seat 1. This is advantageous as the method according to the invention can be autonomously implemented in the vehicle. However, the input signals can also be coming from sensors which serve other purposes in the vehicle such as the airbag sensors.

The invention is directed at constantly monitoring the comfort and safety offered to a seat occupant by exercising a coordinated control on all the seat functions; in the embodiment of the invention illustrated on the drawing the seat coordinated control is operated by a single CPU 11 which controls the suspension mechanism 4, the reclining mechanism 10 and the restraint mechanism 12 when the vehicle operates under a normal ride mode and under imminent collision mode as far as safety is concerned or under a normal road surface mode or under a degraded road surface mode as far as comfort is concerned.

In an embodiment of the invention, the accelerations of the vehicle according to the vehicle's longitudinal, transversal and vertical axis and the distance between the vehicle and an obstacle are monitored.

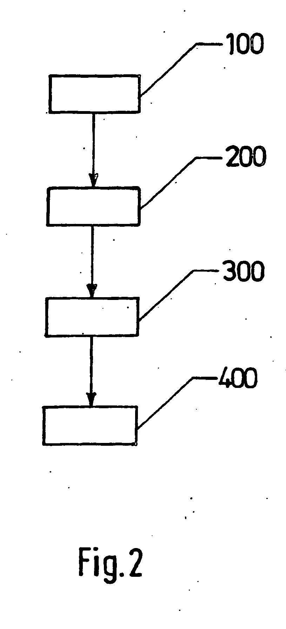

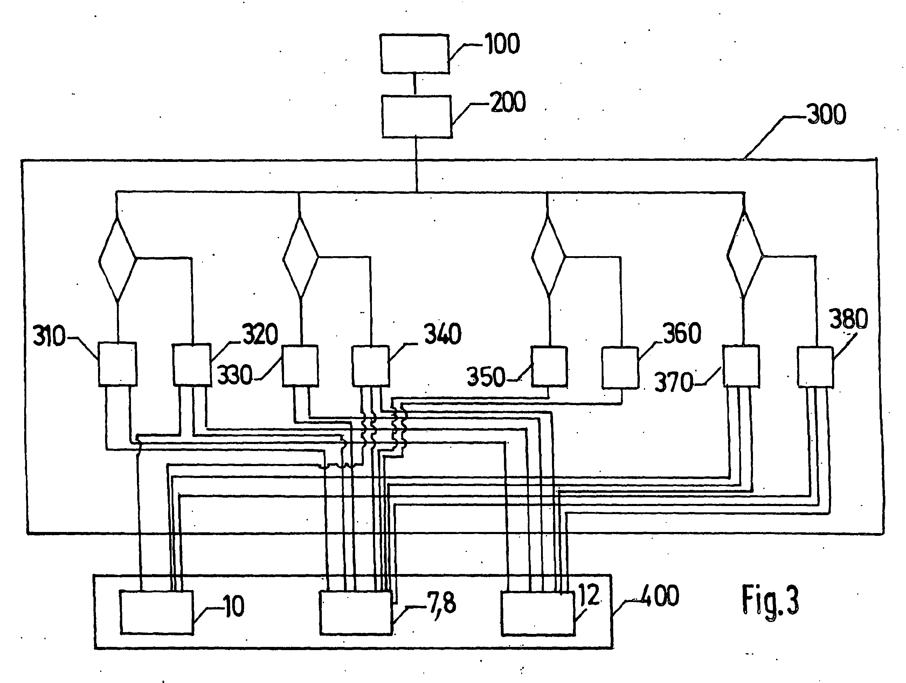

The method can comprise a first step of periodically sensing the longitudinal, transversal or vertical accelerations by one or more accelerometers (100 of Figure 2 or Figure 3); this provides signals proportional to the acceleration or the deceleration of the vehicle. The distance between the vehicle and an obstacle is also monitored. The signals are then fed to the CPU 11; this is illustrated by 200 of Figure 2 or Figure 3.

In the CPU 11, the acceleration and distance signals are compared with acceleration reference data and distance reference data which can be stored in the ROM. Depending on whether the acceleration signal exceeds or not said reference data, the CPU 11 identifies the current vehicle operational mode. The step of processing the vehicle operational parameter is shown by 300 of Figure 2; box 300 of figure 3 shows the step in more details and will be described below.

Based on the acceleration signals, the CPU 11 can communicate (400 of Figure 2 or Figure 3) an output signal to each of the subcomponents to put the seat in a configuration adapted to the vehicle operational mode. The output signal can suitably be a low voltage current.

Now, referring to Figure 2, the method is explained. In a step 100 executed by one or more sensors such as sensors 14, 15, 16, 17, 18 one or more vehicle operational parameters are measured. A signal representing a measured parameter is fed to a processing means which can be a CPU such as the CPU 11. This is illustrated by step 200 on Figure 2.

The value of each sensed parameter is compared with a reference data which can be a threshold value of the parameter, a rate of change of said parameter or a function of said parameter or a combination of two or more of these data. The processing step 300 of the sensed parameters can suitably be executed by a routine stored in the processing means. Depending on the value of each sensed parameter relative to the reference value of said parameter, the processing means determines a vehicle operational mode under which the vehicle operates; as this is apparent, a vehicle operational mode is a state of the vehicle at one time, said state being related to the safety or the comfort of the seat occupant. It should be noted that different operational modes can be defined depending on the vehicle type and on the intended use of the vehicle. For example, the operational modes that can be defined for a passenger car might be different from the operational modes defined for an industrial vehicle; however, the method according to the invention can be implemented on any type of vehicles provided a suitable definition of the operational modes and of the vehicle parameters and their respective reference data is carried out.

Once the processing means, depending on the value of the sensed parameter, has established under which operational mode the vehicle operates, the processing means then issues (see box 400 of figure 2) several coordinated output signals towards the seat to put the seat in a configuration adapted to the vehicle operational mode.

Figure 3 is a flowchart illustrating in detail a processing procedure for controlling the seat 1 depicted on Figure 1.

In the illustrated example, the vehicle operational modes under which the vehicle can operate are determined by sensing the vehicle longitudinal, transversal, vertical acceleration and the distance between the vehicle front end and an obstacle (the obstacle can be moving - i.e. another vehicle - or motionless). Monitoring the vehicle longitudinal, transversal and vertical acceleration and the distance relative to an obstacle can provide a significant picture of the vehicle state but several other parameters can be considered to determine a vehicle operational state.

As depicted on figure 1, the seat 1 is capable of performing at least four functions which can be:
- flexibly connecting the seat to the vehicle,
- adjusting an angular position of the seat with regard to the vehicle,
- adjusting an angular position of the backrest part 3 of the seat with regard to a cushion part 2 of the seat,
- restraining an occupant onto the seat.

To perform these functions, the seat is equipped with subcomponents including:
- the suspension mechanism 4 adapted to flexibly connect the seat to the vehicle and/or to angularly adjust the seat position relative the vehicle,
- the reclining mechanism 10 adapted to allow an angular displacement of a backrest part of the seat relative to a cushion part of the seat,
- the restrain mechanism 12 having a seat belt and belt winding means adapted to restraint an occupant onto the seat,

Figure 3 illustrates how, for a vehicle seat as the one depicted on Figures 1, the method according to the invention coordinates all seat functions by coordinating all seat subcomponents.

In the illustrated implementation of the method, the vehicle's longitudinal, transversal and vertical acceleration together with the distance separating the frontal end of the vehicle to an obstacle are the parameters which are considered as representative of the vehicle state, therefore input signals representative of these parameters are fed to the CPU 11. The box 300 shows how these input signals are processed by the CPU 11.

If the longitudinal acceleration sensed by a longitudinal acceleration sensor 14 is negative and is below the reference data, the CPU 11 identifies the vehicle as operating in a normal braking mode 310; the CPU 11 can issue an output signal to the seat suspension which has the effect of stiffening the seat suspension mechanism; the CPU 11 can also issue an output signal towards the restraint mechanism which has the effect of locking the seat belt. The seat is therefore set in an extremely favourable configuration insofar as the seat does not tilt forwardly under the deceleration force and the seat occupant is more efficiently restrained. When no negative acceleration is sensed, the action on the seat suspension mechanism ceases, thereby putting the seat in a configuration oriented to provide comfort to the seat occupant; and the action on the restraint mechanism ceases, thereby re-establishing the comfort seat function for the seat occupant of moving within the winding scope of the seat belt.

On the other hand, if the longitudinal acceleration sensed by the accelerometer 14 is negative and is above the reference data, the CPU 11 identifies the vehicle as operating in an imminent collision mode 320; the CPU 11 can issue an output signal to the seat suspension 4 which has the effect of raising the front end of the cushion part 2 of the seat. In the case of a seat as described on fig 1, the orientation of the seat cushion part 2 of the seat is modified by raising the front suspension system 7 and lowering the back suspension system 8. By raising the front end of the cushion part 2 of the seat the submarining effect on the seat occupant is limited to a significant extent. Simultaneously, the CPU 11 can transmit a signal to the restraint mechanism which has the effect of increasing the tension of the seat belt. A signal can also be sent to the reclining mechanism 10 with the effect of locking said reclining mechanism 10. The seat is; therefore, in a favourable configuration in the event of a collision. If the collision is avoided, which for the accelerometer means that the acceleration is null or insignificant, the CPU 11 transmits an output signal to i) the suspension mechanism which has the effect of replacing the cushion part 2 of the seat in its original orientation that is to say substantially parallel to the cabin floor, which is the most appropriate orientation for the occupant when the vehicle is operating under a normal mode, ii) to the restraint mechanism 12 to release the tension on the seat belt thereby re-establishing the faculty for the occupant to move within the winding scope of the seat belt; and iii) to the reclining mechanism 10 thereby re-establishing the faculty for the occupant to adjust the orientation of the backrest part of the seat according to his or her wish.

If the longitudinal acceleration is positive and is above a reference data, the CPU 11 can identify the vehicle as operating under a rear collision mode; a sharp acceleration experienced by the vehicle can be translated into this operational mode. The CPU 11 can transmit a signal to the restraint mechanism which has the effect of increasing the tension of the seat belt. A signal can also be sent to the reclining mechanism 10 with the effect of locking said reclining mechanism 10. The seat is, therefore, in a favourable configuration in the event of a rear collision.

If the transversal acceleration sensed by a transversally oriented accelerometer is below the reference data for transversal acceleration, the CPU 11 identifies the vehicle as operating in a normal cornering mode 330, that is to say the vehicle speed matches the radius of a corner in which the vehicle is engaged. To compensate the effect of the centrifugal acceleration on the seat occupant, the CPU 11 can communicate an output signal to the suspension mechanism 4 to stiffen the seat suspension and/or to the restraint mechanism 12 to lock the seat belt.

On the other hand, if the transversal acceleration is above the reference data for transversal acceleration, the CPU 11 identifies the vehicle as operating in an imminent crash mode 340 by a possible roll over of the vehicle or by a side impact, the actions ordered by the CPU 11 can be similar to those described above in the case of an imminent collision mode 320.

If the vertical acceleration sensed by a vertically oriented accelerometer is below the reference data for vertical acceleration, the CPU 11 identifies the vehicle as operating in a normal road surface mode 350, that is to say the vehicle runs on a normally surfaced road. The CPU 11 can communicate an output signal to the suspension to increase its stiffness.

On the other hand, if the vertical acceleration is above the reference data for vertical acceleration typically when the vehicle runs on a badly surfaced road, the CPU 11 identifies the vehicle as operating under a degraded road surface mode 360. To adjust the seat to this mode, the CPU 11 can transmit an output signal to the suspension mechanism ordering to decrease the stiffness of suspension thereby offering a better comfort to the occupant.

If the distance sensed by the distance sensor 17 is above the reference data for the distance parameter, the CPU 11 identifies the vehicle as operating in a normal running mode 370; the CPU 11 can issue an output signal to the restraint mechanism 12 which has the effect of unlocking the seat belt to offer the seat occupant the faculty to move within the scope of the seat belt winding mechanism, the CPU 11 can also issue an output signal to the reclining mechanism 10 with the effect of authorising the angular displacement of the back rest part of the seat with regard to the cushion part of the seat; the CPU 11 can also issue an output signal to the seat suspension with the effect of decreasing the suspension stiffness to fully absorb the vibration input transmitted to the cabin.

On the other hand, if the distance sensed by the distance sensor 17 is below the reference data the CPU identifies the vehicle as operating in an imminent collision mode 380 by a frontal crash. The CPU 11 can issue a series of output signals similar to those defined for the imminent collision mode 320.

As it is apparent from the above description, the invention offers a method which coordinates all seat functions in imminent collision mode and thereby has a significant impact on the safety of the occupant and in normal running mode and thereby has a significant impact on the comfort of the vehicle. The method according to the invention offers a global control on a seat to constantly adjust said seat into a configuration adapted to the occupant safety or/and comfort, bearing in mind that the method can make provision for the occupant safety to prevail over the occupant comfort.

## Claims

1. A method of controlling a vehicle seat, the vehicle seat comprising at least two functionally controllable features of the group including (i) flexibly connecting said seat to the vehicle, (ii) adjusting an angular position of the seat with regard to the vehicle, (iii) adjusting an angular position of a backrest part of the seat with regard to a cushion part of the seat, (iv) restraining an occupant onto the vehicle seat with regard to safety and comfort and use of a seat occupant, where the functionally controllable features comprise electronically controllable subcomponents the method comprising the steps of:
- sensing (100) at least one vehicle operational parameter,
- feeding (200) the sensed at least one operational parameter to a processing means,
- processing (300) the sensed at least one vehicle operational parameter, where the processing of the sensed at least one vehicle operational parameter comprises comparing the sensed at least one vehicle operational parameter with reference data to thereby determine a vehicle operational mode, and further comprises deriving at least one output signal according to the determined vehicle operational mode,
**characterized in that** the method includes the step of determining a vehicle operational parameter by:
- sensing (100) the vehicle longitudinal acceleration; feeding (200) said longitudinal acceleration to the processing means; processing (300) said longitudinal acceleration by comparison with a longitudinal acceleration reference data to determine if the vehicle is in a normal braking mode (310) or if the vehicle is in imminent collision mode (320); feeding said output signal to at least one of the subcomponents to put the seat in a configuration adapted to the vehicle operational mode, by coordinatedly controlling (400) the at least two functionally controllable features of the vehicle seat; and/or
- sensing (100) the vehicle lateral acceleration; feeding (200) said lateral acceleration to the processing means; processing (300) said lateral acceleration by comparison with a lateral acceleration reference data to determine if the vehicle is in normal cornering mode (330) or if the vehicle is in imminent crash mode (340); feeding said output signal to at least one of the subcomponents to put the seat in a configuration adapted to the vehicle operational mode, by coordinatedly controlling (400) the at least two functionally controllable features of the vehicle seat; and/or
- sensing (100) a vertical acceleration; feeding (200) said vertical acceleration to the processing means processing (300) said vertical acceleration by comparison with a vertical acceleration reference data to determine if the vehicle runs in a normal road surface mode (350) or if the vehicle runs in a degraded road surface mode (360); feeding said output signal to at least one of the subcomponents to put the seat in a configuration adapted to the vehicle operational mode, by coordinatedly controlling (400) the at least two functionally controllable features of the vehicle seat; and/or
- sensing (100) the distance between the vehicle and an obstacle; feeding (200) said distance to the processing means; processing (300) said distance by comparison with a distance reference data to determine if the vehicle is operating under a normal running mode (370) or if the vehicle is operating under a imminent collision mode (380); feeding said output signal to at least one of the subcomponents to put the seat in a configuration adapted to the vehicle operational mode, by coordinatedly controlling (400) the at least two functionally controllable features of the vehicle seat.

2. The method of controlling a vehicle seat according to claim 1, **characterized in that** the electronically controllable subcomponents includes:
- a suspension mechanism adapted to flexibly connect the seat to the vehicle and/or to angularly adjust the seat position relative to the vehicle,
- a reclining mechanism adapted to allow an angular displacement of a backrest part of the seat relative to a cushion part of the seat,
- a restraint mechanism having a seat belt and belt winding means adapted to restrain an occupant onto the seat.

3. The method of controlling a vehicle seat according to claim 1 or 2, **characterized in that** feeding the at least one output signal to the electronically controllable subcomponents comprises one or more actions of the group of:
- increasing or decreasing the stiffness of the seat suspension mechanism,
- locking or unlocking the seat suspension mechanism,
- tilting the cushion part of the seat by acting on the seat suspension mechanism,
- locking or unlocking the seat belt,
- increasing the tension on the seat belt,
- locking or unlocking the reclining mechanism.

4. The method of controlling a vehicle seat according to claim 3 **characterized in that**, if the vehicle is in a normal braking mode (310), the method comprises one step or the combination of two steps of the group of:
- stiffening the seat suspension mechanism,
- locking the seat belt.

5. The method of controlling a vehicle seat according to claim 3 **characterized in that**, if the vehicle is in an imminent collision mode (320, 380), the method comprises one step or the combination of two or more steps of the group of:
- locking the seat belt,
- increasing the tension of the seat belt,
- locking the reclining mechanism,
- raising the front end of the cushion part of the seat.

6. The method of controlling a vehicle seat according to claim 3, **characterized in that** if the vehicle is in a normal cornering mode (330), the method comprises one step or the combination of two steps of the group of:
- stiffening the seat suspension mechanism,
- locking the seat belt.

7. The method of controlling a vehicle seat according to claim 3, **characterized in that**, if the vehicle is in an imminent crash mode (340), the method comprises the steps of:
- locking the seat belt,
- increasing the tension of the seat belt,
- locking the reclining mechanism,
- raising the front end of the cushion part of the seat.

8. The method of controlling a seat according to claim 3, **characterized in that**, if the vehicle runs in a normal road surface mode (350), the method comprises increasing the stiffness of the seat suspension mechanism.

9. The method of controlling a seat according to claim 3, **characterized in that**, if the vehicle runs in a degraded road surface mode (360), the method comprises decreasing the stiffness of the seat suspension.

10. The method of controlling a vehicle seat according to claim 3, **characterized in that**, if the vehicle is in a normal running mode (370) the method comprises one step or the combination of two or more steps of the group of:
- unlocking the seat belt,
- unlocking the reclining mechanism,
- decreasing the stiffness of the seat suspension.

## Patentansprüche

1. Verfahren zur Steuerung eines Fahrzeugsitzes, wobei der Fahrzeugsitz wenigstens zwei funktional steuerbare Merkmale der Gruppe umfasst, die einschließt
(i) eine flexible Verbindung des Sitzes mit dem Fahrzeug,
(ii) eine Einstellung einer Winkelposition des Sitzes bezüglich des Fahrzeugs,
(iii) eine Einstellung einer Winkelposition eines Lehnenteils des Sitzes bezüglich eines Kissenteils des Sitzes,
(iv) ein Zurückhalten eines Passagiers auf dem Fahrzeugsitz bezüglich Sicherheit und Komfort und Benutzung eines Sitzpassagiers,
wobei die funktional steuerbaren Merkmale elektronisch steuerbare Nebenkomponenten umfassen, wobei das Verfahren die Schritte umfasst:
- Erfassung (100) wenigstens eines Fahrzeugbetriebsparameters,
- Zuleiten (200) des erfassten wenigstens einen Betriebsparameters zu einer Verarbeitungseinrichtung,
- Verarbeitung (300) des erfassten wenigstens einen Fahrzeugbetriebsparameters, wobei die Verarbeitung des erfassten wenigstens einen Fahrzeugbetriebsparameters ein Vergleichen des erfassten wenigstens einen Fahrzeugbetriebsparameters mit Referenzdaten umfasst, um hierdurch einen Fahrzeugbetriebsmodus zu bestimmen, und außerdem das Ableiten wenigstens eines Ausgangssignals entsprechend dem bestimmten Fahrzeugbetriebsmodus umfasst,
**dadurch gekennzeichnet, dass** das Verfahren den Schritt der Bestimmung eines Fahrzeugbetriebsparameters umfasst durch:
- Erfassung (100) der Fahrzeuglängsbeschleunigung, Zuleitung (200) der Längsbeschleunigung zu der Verarbeitungseinrichtung, Verarbeitung (300) der Längsbeschleunigung durch Vergleich mit Längsbeschleunigungsreferenzdaten, um zu bestimmen, ob das Fahrzeug sich in einem Modus (310) für normales Bremsen befindet oder ob das Fahrzeug sich im Modus (320) einer bevorstehenden Kollision befindet, Zuleitung des Ausgangssignals zu wenigstens einer der Nebenkomponenten, um den Sitz in eine Konfiguration zu bringen, die an den Fahrzeugbetriebsmodus angepasst ist, indem die wenigstens zwei funktional steuerbaren Merkmale des Fahrzeugsitzes koordiniert gesteuert werden (400); und/oder
- Erfassung (100) der Fahrzeugseitenbeschleunigung, Zuleitung (200) der Seitenbeschleunigung zu der Verarbeitungseinrichtung, Verarbeitung (300) der Seitenbeschleunigung durch Vergleich mit Seitenbeschleunigungsreferenzdaten, um zu bestimmen, ob das Fahrzeug sich in einem Modus (330) für normales Kurvenfahren befindet oder ob das Fahrzeug sich in einem Modus eines bevorstehenden Unfalls (340) befindet, Zuleitung des Ausgangssignals zu wenigstens einer der Nebenkomponenten, um den Sitz in eine Konfiguration zu bringen, die an den Fahrzeugbetriebsmodus angepasst ist, indem die wenigstens zwei funktional steuerbaren Merkmale des Fahrzeugsitzes koordiniert gesteuert werden (400); und/oder
- Erfassung (100) einer vertikalen Beschleunigung, Zuleitung (200) der vertikalen Beschleunigung zu der Verarbeitungseinrichtung, Verarbeitung (300) der vertikalen Beschleunigung durch Vergleich mit Referenzdaten für die vertikale Beschleunigung, um zu bestimmen, ob das Fahrzeug in einem Modus (350) für normale Straßenoberfläche fährt, oder ob das Fahrzeug in einem Modus (360) für eine verschlechterte Straßenoberfläche fährt, Zuleitung des Ausgangssignals zu wenigstens einer der Nebenkomponenten, um den Sitz in eine Konfiguration zu bringen, die an den Fahrzeugbetriebsmodus angepasst ist, indem die wenigstens zwei funktional steuerbaren Merkmale des Fahrzeugsitzes koordiniert gesteuert werden (400); und/oder
- Erfassung (100) des Abstandes zwischen dem Fahrzeug und einem Hindernis, Zuleitung (200) des Abstandes zu der Verarbeitungseinrichtung, Verarbeitung (300) des Abstandes durch Vergleich mit Abstandsreferenzdaten, um zu bestimmen, ob das Fahrzeug in einem Modus (370) für ein normales Fahren betrieben wird oder ob das Fahrzeug in einem Modus (380) für eine bevorstehende Kollision betrieben wird, Zuleitung des Ausgangssignals zu wenigstens einer der Nebenkomponenten, um den Sitz in eine Konfiguration zu bringen, die an den Fahrzeugbetriebsmodus angepasst ist, indem die wenigstens zwei funktional steuerbaren Merkmale des Fahrzeugsitzes koordiniert gesteuert werden (400).

2. Verfahren zur Steuerung eines Fahrzeugsitzes nach Anspruch 1, **dadurch gekennzeichnet, dass** die elektronisch steuerbaren Nebenkomponenten umfassen:
- einen Federungsmechanismus, der dazu angepasst ist, den Sitz mit dem Fahrzeug flexibel zu verbinden und/oder die Sitzposition bezüglich des Fahrzeugs im Winkel einzustellen,
- einen Neigemechanismus, der dazu ausgelegt ist, eine Winkelverstellung eines Lehnenteils des Sitzes bezüglich eines Kissenteils des Sitzes zu ermöglichen,
- einen Rückhaltemechanismus mit einem Sitzgurt und Gurtwickeleinrichtung, der dazu geeignet ist, einen Passagier auf dem Sitz zurückzuhalten.

3. Verfahren zur Steuerung eines Fahrzeugsitzes nach Anspruch 1 oder 2, **dadurch gekennzeichnet, dass** die Zuleitung des wenigstens einen Ausgangssignals zu den elektronisch steuerbaren Nebenkomponenten eine oder mehrere Aktionen der Gruppe umfasst von:
- Erhöhung oder Verringerung der Steifheit des Sitzfederungsmechanismus,
- Verriegeln oder Entriegeln des Sitzfederungsmechanismus,
- Neigen des Kissenteils des Sitzes durch Wirken auf den Sitzfederungsmechanismus,
- Verriegeln oder Entriegeln des Sitzgurts,
- Erhöhung der Spannung des Sitzgurts,
- Verriegeln oder Entriegeln des Neigemechanismus.

4. Verfahren zur Steuerung eines Fahrzeugsitzes nach Anspruch 3, **dadurch gekennzeichnet, dass**, wenn sich das Fahrzeug in einem Modus (310) für ein normales Bremsen befindet, das Verfahren einen Schritt oder eine Kombination der zwei Schritte der Gruppe umfasst von
- Versteifung des Sitzfederungsmechanismus,
- Verriegeln des Sitzgurtes.

5. Verfahren zur Steuerung eines Fahrzeugsitzes nach Anspruch 3, **dadurch gekennzeichnet, dass**, wenn sich das Fahrzeug in einem Modus (320, 380) für eine bevorstehende Kollision befindet, das Verfahren einen oder die Kombination von zwei oder mehreren Schritten der Gruppe umfasst von
- Verriegeln des Sitzgurtes,
- Erhöhen der Spannung des Sitzgurtes,
- Verriegeln des Neigemechanismus,
- Anheben des vorderen Endes des Kissenteils des Sitzes.

6. Verfahren zur Steuerung eines Fahrzeugsitzes nach Anspruch 3, **dadurch gekennzeichnet, dass**, wenn sich das Fahrzeug in einem Modus (330) für ein normales Kurvenfahren befindet, das Verfahren den Schritt oder die Kombination von zwei Schritten der Gruppe umfasst von
- Versteifung des Sitzfederungsmechanismus,
- Verriegeln des Sitzgurtes.

7. Verfahren zur Steuerung eines Fahrzeugsitzes nach Anspruch 3, **dadurch gekennzeichnet, dass**, wenn sich das Fahrzeug in einem Modus (340) für einen bevorstehenden Unfall befindet, das Verfahren die Schritte umfasst:
- Verriegeln des Sitzgurtes,
- Erhöhen der Spannung des Sitzgurtes,
- Verriegeln des Neigemechanismus,
- Anheben des vorderen Endes des Kissenteils des Sitzes.

8. Verfahren zur Steuerung eines Sitzes nach Anspruch 3, **dadurch gekennzeichnet, dass**, wenn das Fahrzeug in einem Modus (350) für eine normale Straßenoberfläche fährt, das Verfahren das Erhöhen der Steifheit des Sitzfederungsmechanismus umfasst.

9. Verfahren zur Steuerung eines Sitzes nach Anspruch 3, **dadurch gekennzeichnet, dass**, wenn das Fahrzeug in einem Modus (360) für eine verschlechterte Straßenoberfläche fährt, das Verfahren die Verringerung der Steifheit der Sitzfederung umfasst.

10. Verfahren zur Steuerung eines Fahrzeugsitzes nach Anspruch 3, **dadurch gekennzeichnet, dass**, wenn das Fahrzeug in einem Modus (370) für normales Fahren fährt, das Verfahren einen Schritt oder die Kombination von zwei oder mehreren Schritten der Gruppe umfasst von
- Entriegeln des Sitzgurtes,
- Entriegeln des Neigemechanismus,
- Verringerung der Steifheit der Sitzfederung.

## Revendications

1. Procédé de commande d'un siège de véhicule, ce siège de véhicule comportant au moins deux caractéristiques pouvant être commandées de manière fonctionnelle parmi le groupe de caractéristiques comprenant (i) le raccordement flexible dudit siège au véhicule, (ii) le réglage d'une position angulaire du siège par rapport au véhicule, (iii) le réglage d'une position angulaire d'une partie dossier du siège par rapport à une partie coussin du siège, (iv) la retenue d'un occupant sur le siège du véhicule en tenant compte de la sécurité, du confort et de l'utilisation d'un occupant du siège, ces caractéristiques pouvant être commandées de manière fonctionnelle comprenant des organes secondaires pouvant être commandés électroniquement, ce procédé comprenant les étapes consistant à :
- détecter (100) au moins un paramètre de fonctionnement du véhicule,
- alimenter (200) l'au moins un paramètre de fonctionnement détecté à un moyen de traitement,
- traiter (300) l'au moins un paramètre de fonctionnement du véhicule détecté, le traitement de l'au moins un paramètre de fonctionnement du véhicule détecté comprenant la comparaison de l'au moins un paramètre de fonctionnement du véhicule détecté avec des données de référence pour déterminer ainsi un mode de fonctionnement du véhicule, et comprenant en outre l'obtention d'au moins un signal de sortie selon le mode de fonctionnement du véhicule déterminé, **caractérisé en ce que** ce procédé comprend l'étape consistant à déterminer un paramètre de fonctionnement du véhicule en :
- détectant (100) l'accélération longitudinale du véhicule ; en alimentant (200) ladite accélération longitudinale au moyen de traitement ; en traitant (300) ladite accélération longitudinale par comparaison avec des données de référence d'accélération longitudinale afin de déterminer si le véhicule est dans un mode de freinage normal (310) ou si le véhicule est dans un mode de collision imminente (320) ; en alimentant ledit signal de sortie à au moins un des organes secondaires afin de mettre le siège dans une configuration adaptée au mode de fonctionnement du véhicule, en commandant de manière coordonnée (400) les au moins deux caractéristiques du siège du véhicule pouvant être commandées de manière fonctionnelle ; et/ou
- en détectant (100) l'accélération latérale du véhicule ; en alimentant (200) ladite accélération latérale au moyen de traitement ; en traitant (300) ladite accélération latérale par comparaison avec des données de référence d'accélération latérale afin de déterminer si le véhicule est dans un mode de prise de virage normale (330) ou si le véhicule est dans un mode de tamponnement imminent (340) ; en alimentant ledit signal de sortie à au moins un des organes secondaires afin de mettre le siège dans une configuration adaptée au mode de fonctionnement du véhicule, en commandant de manière coordonnée (400) les au moins deux caractéristiques du siège du véhicule pouvant être commandées de manière fonctionnelle ; et/ou
- en détectant (100) une accélération verticale ; en alimentant (200) ladite accélération verticale au contrôleur ; en traitant (300) ladite accélération verticale par comparaison avec des données de référence d'accélération verticale afin de déterminer si le véhicule se déplace dans un mode de surface de roulement normale (350) ou si le véhicule se déplace dans un mode de surface de roulement dégradée (360) ; en alimentant ledit signal de sortie à au moins un des organes secondaires afin de mettre le siège dans une configuration adaptée au mode de fonctionnement du véhicule, en commandant de manière coordonnée (400) les au moins deux caractéristiques du siège du véhicule pouvant être commandées de manière fonctionnelle ; et/ou
- en détectant (100) la distance entre le véhicule et un obstacle ; en alimentant (200) ladite distance au moyen de traitement ; en traitant (300) ladite distance par comparaison avec des données de référence de distance afin de déterminer si le véhicule fonctionne dans un mode de fonctionnement normal (370) ou si le véhicule fonctionne dans un mode de collision imminente (380) ; en alimentant ledit signal de sortie à au moins un des organes secondaires afin de mettre le siège dans une configuration adaptée au mode de fonctionnement du véhicule, en commandant de manière coordonnée (400) les au moins deux caractéristiques du siège du véhicule pouvant être commandées de manière fonctionnelle.

2. Procédé de commande d'un siège de véhicule selon la revendication 1, **caractérisé en ce que** les organes secondaires pouvant être commandés électroniquement comprennent :
- un mécanisme de suspension adapté de façon à raccorder le siège de manière flexible au véhicule et/ou à régler angulairement la position du siège par rapport au véhicule,
- un mécanisme d'inclinaison adapté de façon à permettre un déplacement angulaire d'une partie dossier du siège par rapport à une partie coussin du siège,
- un mécanisme de retenue ayant une ceinture de sécurité et un moyen d'enroulement de la ceinture adapté de façon à retenir un occupant sur le siège.

3. Procédé de commande d'un siège de véhicule selon la revendication 1 ou 2, **caractérisé en ce que** l'alimentation de l'au moins un signal de sortie aux organes secondaires pouvant être commandés électroniquement comprend une ou plusieurs actions dans le groupe comprenant :
- l'augmentation ou la diminution de la rigidité du mécanisme de suspension du siège,
- le blocage ou le déblocage du mécanisme de suspension du siège,
- l'inclinaison de la partie coussin du siège en agissant sur le mécanisme de suspension du siège,
- le blocage ou le déblocage de la ceinture de sécurité,
- l'augmentation de la tension sur la ceinture de sécurité,
- le blocage ou le déblocage du mécanisme d'inclinaison du dossier.

4. Procédé de commande d'un siège de véhicule selon la revendication 3, **caractérisé en ce que**, si le véhicule est dans un mode de freinage normal (310), ce procédé comprend une étape ou la combinaison de deux étapes dans le groupe comprenant :
- l'augmentation de la rigidité du mécanisme de suspension du siège,
- le blocage de la ceinture de sécurité.

5. Procédé de commande d'un siège de véhicule selon la revendication 3, **caractérisé en ce que**, si le véhicule est dans un mode de collision imminente (320, 380), ce procédé comprend une étape ou la combinaison de deux étapes ou plus dans le groupe comprenant :
- le blocage de la ceinture de sécurité,
- l'augmentation de la tension de la ceinture de sécurité,
- le blocage du mécanisme d'inclinaison du dossier,
- le soulèvement de l'extrémité avant de la partie coussin du siège.

6. Procédé de commande d'un siège de véhicule selon la revendication 3,
**caractérisé en ce que**, si le véhicule est dans un mode de prise de virage normale (330), ce procédé comprend une étape ou la combinaison de deux étapes dans le groupe comprenant :
- l'augmentation de la rigidité du mécanisme de suspension du siège,
- le blocage de la ceinture de sécurité.

7. Procédé de commande d'un siège de véhicule selon la revendication 3, **caractérisé en ce que**, si le véhicule est dans un mode de tamponnement imminent (340), ce procédé comprend les étapes consistant à :
- bloquer la ceinture de sécurité,
- augmenter la tension de la ceinture de sécurité,
- bloquer le mécanisme d'inclinaison du dossier,
- soulever l'extrémité avant de la partie coussin du siège.

8. Procédé de commande d'un siège selon la revendication 3, **caractérisé en ce que**, si le véhicule fonctionne dans un mode de surface de roulement normale (350), ce procédé comprend l'augmentation de la rigidité du mécanisme de suspension du siège.

9. Procédé de commande d'un siège selon la revendication 3, **caractérisé en ce que**, si le véhicule fonctionne dans un mode de surface de roulement dégradée (360), ce procédé comprend la diminution de la rigidité du mécanisme de suspension du siège.

10. Procédé de commande d'un siège de véhicule selon la revendication 3, **caractérisé en ce que**, si le véhicule est dans un mode de fonctionnement normal (370), ce procédé comprend une étape ou la combinaison de deux étapes ou plus dans le groupe comprenant .
- le déblocage de la ceinture de sécurité,
- le déblocage du mécanisme d'inclinaison du dossier,
- la diminution de la rigidité de la suspension du siège.
